# EUROPÄISCHE PATENTSCHRIFT

(11) **EP 0 677 424 B1**
(45) Veröffentlichungstag und Bekanntmachung des Hinweises auf die Patenterteilung: **10.02.1999**
(21) Anmeldenummer: 94810736.2
(22) Anmeldetag: 20.12.1994
(51) Int. Cl.: B60P 3/00, B65G 49/06

(54) **Fahrzeug für den Transport von Materialplatten**
Transport vehicle for sheet material
Véhicule de transport de matériaux en plaque

(30) Priorität: 14.04.1994 CH 1128/94
(43) Veröffentlichungstag der Anmeldung: 18.10.1995
(73) Patentinhaber: Glas Trösch Holding AG, 3011 Bern (CH)
(72) Erfinder: Haegler, Erich, CH-4556 Aeschi (CH)
(74) Vertreter: Roshardt, Werner Alfred, Dipl.-Phys.

(56) Entgegenhaltungen:
- DE-A- 3 305 840
- DE-U- 8 530 631
- DE-U- 8 704 791
- DE-U- 8 814 024
- DE-U- 9 313 114
- US-A- 1 879 513
- US-A- 2 940 402

## Beschreibung

### Technisches Gebiet

Die Erfindung betrifft ein Verfahren gemäss Oberbegriff des Anspruchs 1 und ein zur Durchführung des Verfahrens geeignetes Fahrzeug Gemäss Oberbegriff des Anspruchs 3.

### Stand der Technik

Die Herstellung von hochwertigen Glasplatten erfolgt heutzutage in grossen Fabriken im Rahmen von aufwendigen Herstellungsprozessen. Es werden dabei Floatglasplatten einer Dicke von wenigen Millimetern bis zu mehreren Zentimetern und einer Grösse von bis zu 3,25 m x 6,1 m hergestellt. Diese Platten werden mit Spezialfahrzeugen zum Glasverarbeiter gefahren. Beim Glasverarbeiter fallen hochwertige - weil saubere - Scherben an, die bei der Herstellung von Floatglas wieder verwendet werden können.

Der Transport von Glasplatten erfolgt üblicherweise mit Spezialfahrzeugen resp. besonders ausgebildeten Schleppanhängern für Sattelschlepper. Die Glasplatten werden beim Hersteller auf ein Gestell geladen, welches vom Spezialfahrzeug selbst für den Transport angehoben bzw. aufgeladen werden kann. Beim Glasverarbeiter entlädt sich das Spezialfahrzeug und fährt mit einem leeren Gestell zum Hersteller zurück.

Die bekannten Spezialfahrzeuge sind ausschliesslich für den Transport von Glas- und anderen Platten und Leergestellen geeignet. Die Auslieferung von Glasplatten und die Rücknahme von Glasscherben muss daher auf separaten Wegen erfolgen.

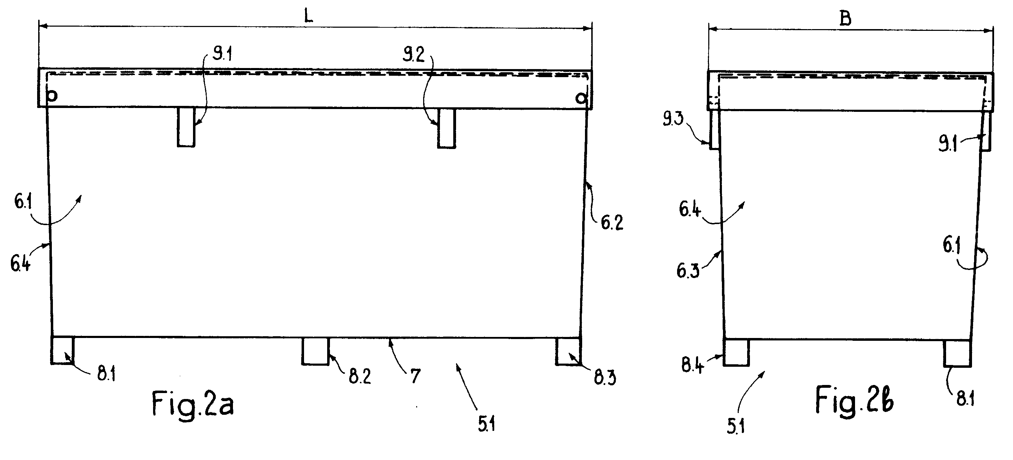

Aus der DE 33 05 840 A1 ist ein gattungsgemässer Lastkraftwagen für den Transport von Glasscheiben bekannt. Zur besseren Ausnutzung des Fahrzeugs ist am Fahrzeugende ein Ausleger angeordnet, welcher leere Behälter aufnehmen kann (vgl. Zusammenfassung). Der Transport des leeren Containers im "Rucksackverfahren" ist gemäss dieser Entgegenhaltung deshalb möglich, weil er gewichtsmässig keine erhebliche Rolle spielt. Der Container (welcher gemäss Fig. 2 z.B. ausziehbar ist) hat eine mit dem Gestell vergleichbare Grösse bzw. Höhe. Mit anderen Worten: Er ist ziemlich gross und sperrig.

G 93 13 114.3 beschreibt ein A-Gestell für den Transport von Glasplatten. Im Inneren des Gestells, d.h. zwischen den gegeneinander geneigten Stützrosten ist ein Container eingesetzt. Er kann entweder fest integriert oder als Einschub ausgebildet sein.

### Darstellung der Erfindung

Aufgabe der Erfindung ist es, ein Verfahren der eingangs genannten Art anzugeben, das sowohl für die Auslieferung der Glasplatten als auch für die Rücknahme von Glasscherben geeignet ist. Ferner soll ein Fahrzeug zur Durchführung des Verfahrens angegeben werden.

Die erfindungsgemässe Lösung ist durch die Merkmale der Ansprüche 1 und 3 definiert.

Dieses Konzept bringt folgende zwei Vorteile mit sich: Erstens können die Leerfahrten nach der Auslieferung für den Ab- bzw. Rücktransport des beim Verarbeiter anfallenden Bruchmaterials genutzt werden und zweitens kann das Bruchmaterial vom Ort seiner Entstehung bis zum Ort seiner definitiven Lagerung bzw. Wiederverwertung transportiert werden, ohne umgeschüttet werden zu müssen.

Die Erfindung eignet sich insbesondere für den Glastransport, wobei mit dem Fahrzeug Glasplatten ausgeliefert und recyclierbare Glasscherben zurückgenommen werden können.

Im Rahmen der Erfindung kann als Fahrzeug jedes Transportmittel dienen. Es ist dabei nicht zwingend, dass das Transportmittel über einen eigenen Antriebsmotor verfügt. D. h. unter einem Fahrzeug ist im Rahmen der Erfindung z. B. auch ein Anhänger oder ein Eisenbahnwagen zu verstehen. Die Erfindung lässt sich sogar auf einen Grosscontainer anwenden, d. h. einen (in der Regel geschlossenen) Behälter, der sowohl ein Gestell für die Glasplatten als auch die offenen Container für das Bruchmaterial aufnehmen kann und der als Ganzes auf einen Lastkraft-, Eisenbahnwagen o. dgl. geladen werden kann.

Der mindestens eine Container kann z. B. in gefülltem Zustand zusammen mit dem leeren Gestell und in leerem Zustand im zusätzlichen Laderaum des Fahrzeugs transportiert werden.

Entsprechend wird der Container so gross bemessen, dass er gerade noch auf dem leeren Gestell transportiert werden kann. Der Laderaum selbst muss bei dieser Variante nicht besonders tragfähig sein, da das Gewicht des leeren Containers bescheiden ist. Wenn andererseits der Container gefüllt ist, kann er auf dem ohnehin sehr belastungsfähigen Gestell für die Glasplatten transportiert werden.

Vorzugsweise ist das Gestell ein L-Gestell. Bei diesem ist die in die Höhe ragende Stützkonstruktion am längsseitigen Rand einer Grundplatte angebracht. Gegenwärtig gebräuchliche L-Gestelle weisen eine Ladebreite von gut 90 cm auf.

Die Erfindung lässt sich auch mit einem sog. A-Gestell realisieren, bei welchem die Stützkonstruktion in der Mitte der Grundplatte angeordnet ist, so dass eine symmetrische Beladung des Gestells möglich ist. Da die für den Containertransport zur Verfügung stehende Breite bei einem A-Gestell relativ klein ist, wird vorgeschlagen, mindestens zwei für das Auffüllen mit Glasscherben zusammenfügbare Container vorzusehen. Es werden also zwei schmale Container zu einem für das Füllen bequemeren "Doppel-Container" längsseitig nebeneinander gestellt.

Vorzugsweise ist der zusätzliche Laderaum in Fahrtrichtung vor dem Gestell angeordnet und als zusätzliche Länge einer Ladebrücke des Fahrzeugs gestaltet. Handelt es sich beim erfindungsgemässen Fahrzeug um einen bevorzugten Schleppanhänger, dann kann der Laderaum über einer Kupplung des Schleppanhängers, also oberhalb des Drehgestells des Zugfahrzeugs angeordnet sein. In diesem Bereich eines Schleppanhängers sind Laderaum und Tragfähigkeit in der Regel zwar begrenzt, können aber zum Transport leerer Container falls erforderlich mit geringem Aufwand angepasst werden. Oft wird dieser Platz für Pneumatikaggregate für den Hebe-/Senkmechanismus des Anhängers gebraucht. Der für die Erfindung erforderliche zusätzliche Platz kann jedoch ohne Probleme durch eine entsprechende Verlängerung der Ladebrücke erreicht werden.

Gemäss einer besonders bevorzugten Ausführungsform weist der Tiefladeteil des Schleppanhängers eine Ueberlänge auf, dergestalt, dass der Container vor oder hinter dem auswechselbaren A- bzw. L-Gestell geladen werden kann. Der Boden des Containers ist dabei wie die Bodenplatte eines A- oder L-Gestells gestaltet, so dass er in gleicher Weise wie diese durch den fahrzeugeigenen Hebemechanismus auf- bzw. abgeladen werden kann. Für den Transport wird dann der Container unmittelbar vor bzw. hinter dem A- bzw. L-Gestell zum gleichzeitigen Laden durch das Fahrzeug positioniert.

Vorzugsweise hat der Container eine Breite von mindestens 80 cm, insbesondere etwa 90-100 cm und eine Länge von mindestens 150 cm, vorzugsweise etwa 200 cm. Im Prinzip sollte die Breite des Containers so gross sein, dass der Container gerade noch auf dem Gestell transportierbar ist.

In Verbindung mit einem A-Gestell wird die Breite des Containers in der Regel kleiner als 50 cm, insbesondere etwa 40 cm sein. Die Länge dagegen kann ohne weiteres 150 cm oder mehr sein.

Mit Vorteil ist der Container mit Füssen ausgestattet, um mit einem Gabelstapler auf- und abgeladen werden zu können. Weiter kann der Container auch Halterungen für den Transport mit einem Ladekran aufweisen. Der Container ist z. B. im wesentlichen quaderförmig. Die Seitenwände können leicht gegenüber der Vertikalen geneigt sein. Diese Neigung ermöglicht nicht nur das Stapeln der Behälter, sondern auch eine optimale Ausnützung des auf dem A- bzw. L-Gestell zur Verfügung stehenden Raums.

Damit ein Container gemäss einer besonders bevorzugten Ausführungsform mit dem Lademechanismus des Transportfahrzeugs geladen werden kann, weist er eine im wesentlichen gleich gestaltete Bodenplatte wie ein A- oder L-Gestell auf. Eine solche Bodenplatte weist an den dafür vorgesehenen, einander gegenüberliegenden Seiten untergreifbare Tragprofile auf. Unter diese kann das Fahrzeug mit seinem Hebemechanismus eingefahren werden.

Aus der Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: Eine Seitenansicht eines erfindungsgemässen Schleppanhängers;
- Fig. 2a, b: eine schematische Darstellung eines erfindungsgemässen Containers;
- Fig. 3a, b: eine schematische Darstellung des Transports des Containers auf einem L-Gestell;
- Fig. 4a, b: eine schematische Darstellung des Transports des Containers auf einem A-Gestell;
- Fig. 5a, b: eine Seiten- und eine Frontansicht eines in gleicher Weise wie und unmittelbar anschliessend an ein L-Gestell transportierbaren Containers;
- Fig. 6a, b: einen erfindungsgemäss ausgerüsteten Eisenbahnwagen in der Drauf- und Seitenansicht.

### Wege zur Ausführung der Erfindung

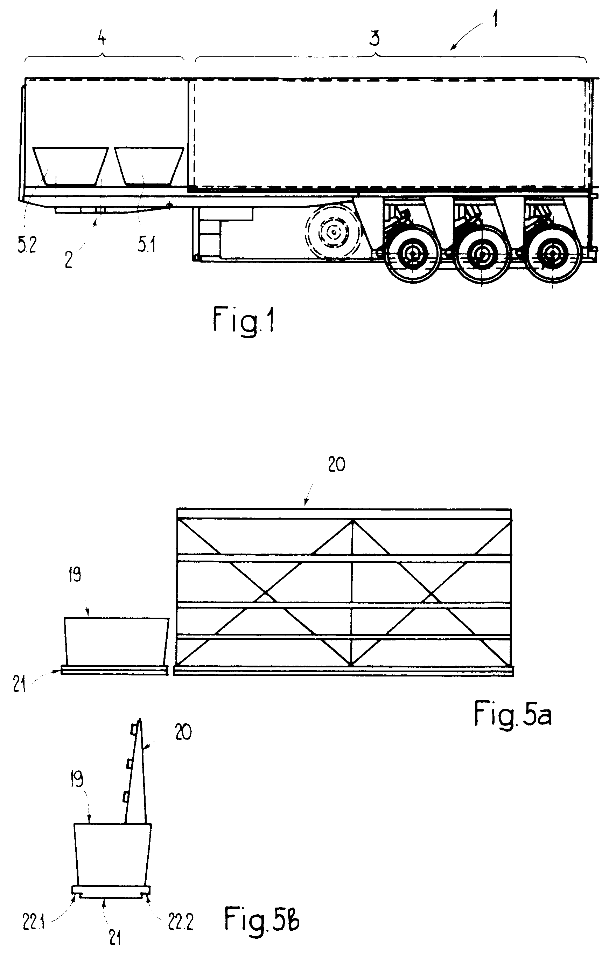

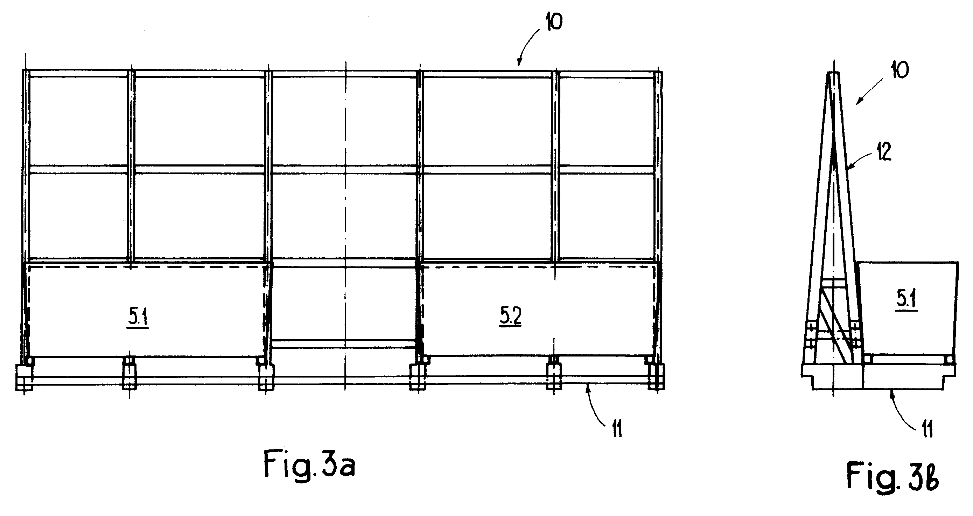

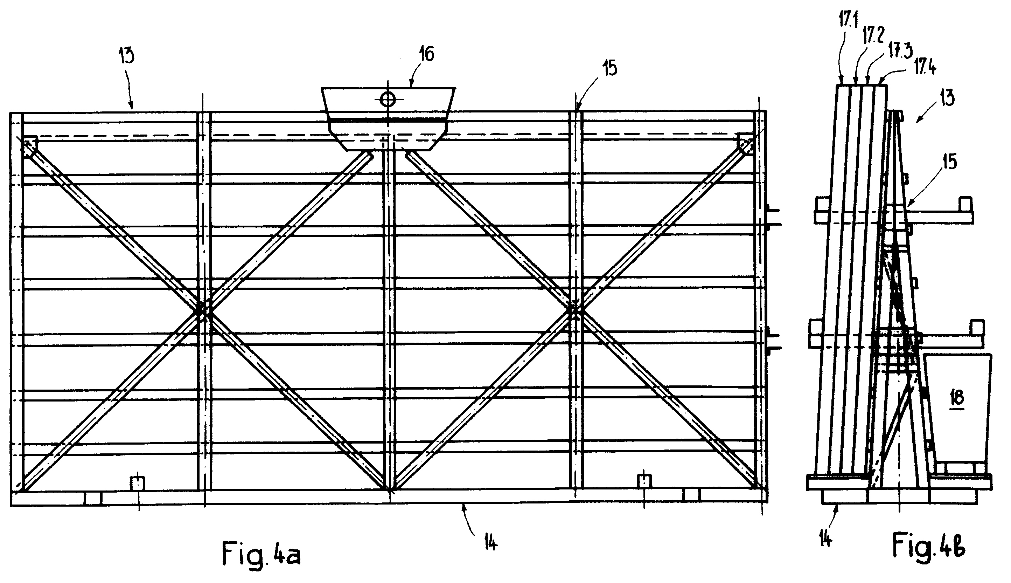

Fig. 1 zeigt einen dreiachsigen Schleppanhänger 1, der mit einer Kupplung 2 zur gelenkigen Verbindung mit einem Drehgestell eines Sattelschleppers ausgerüstet ist. Der Schleppanhänger 1 hat eine Gesamtlänge in der Grössenordnung von 10-12 m. Ein Tiefladeteil 3 nimmt davon eine Teillänge von z. B. 7-8 m ein. Er ist mit einem System zum Transportieren von Glasplatten einer Länge von gut 6 m und einer Höhe von etwa 3 m ausgerüstet. Es handelt sich dabei z. B. um einen an sich bekannten Spezialmechanismus zum Laden von L- oder A-Gestellen, wie sie in den Fig. 3a, b und 4a, b gezeigt sind.

An den Tiefladeteil 3 schliesst ein Zusatzladeraum 4 an, unter welchem die bereits erwähnte Kupplung 2 angeordnet ist. Auf dem Zusatzladeraum 4 sind im vorliegenden Beispiel zwei Container 5.1, 5.2 nebeneinander und quer zur Längsrichtung des Fahrzeugs transportierbar. Der Zusatzladeraum 4 ist etwa 2-3,5 m lang und (entsprechend der Breite des Fahrzeugs) 2-2,5 m breit. Weniger Platz wird natürlich benötigt, wenn die leeren Container 5.1, 5.2 ineinander gestellt werden. Allerdings müssen sie dann zum Füllen jeweils mit einem Kran auseinandergenommen werden.

Da die Container 5.1, 5.2 in der Regel nicht höher als 1-1,5 m sind, steht im oberen Bereich des Zusatzladeraums 4 im Bedarfsfall Platz für Hydraulikaggegrate u. dgl. zur Verfügung.

Fig. 2a, b zeigen einen erfindungsgemässen Container von der Seite resp. von vorn. Er wird durch leicht geneigte Seitenwände 6.1, ..., 6.4 und einen Boden 7 gebildet. Er besteht aus Metall und hat eine Länge L von z. B. 2,3 m und eine Breite B von z. B. 96 cm. Die Seitenwände 6.1, ..., 6.4 sind z. B. um 5° gegen die Vertikale geneigt. Am Boden 7 sind Füsse 8.1, ..., 8.4 angebracht, so dass der Container 5.1 von unten mit einem Gabelstapler gehoben werden kann. An den Seitenwänden 6.1 und 6.3 sind schliesslich im oberen Bereich Befestigungselemente 9.1, 9.2, 9.3 vorgesehen, damit der Container mit Seilen durch einen Lastkran angehoben werden kann.

Fig. 3a, b zeigt ein L-Gestell 10. Es besteht in an sich bekannter Weise aus einer Bodenplatte 11 und einer einseitig aufgebauten Stützkonstruktion 12. An letztere können die Glasplatten für den aufrechten Transport angelehnt werden.

Seitlich der Stützkonstruktion 12 ist - bei leerem Gestell - Platz für mindestens zwei erfindungsgemässe Container 5.1, 5.2. (Die erwähnte Neigung der Seitenwände des Containers 5.1 entspricht in etwa der Neigung der Stützkonstruktion 12. Dies erlaubt eine optimale Ausnützung des zur Verfügung stehenden Raums.)

Fig. 4a, b zeigt ein A-Gestell 13 an sich bekannter Bauart mit einer Bodenplatte 14 und einer längsachsenzentriert auf der Bodenplatte 14 angeordneten vertikalen Stützkonstruktion 15. Letztere ist in der Mitte mit einer Aufhängung 16 versehen, so dass das A-Gestell 13 mit einem Kran angehoben werden kann.

Andeutungsweise sind in Fig. 4b vier Glasplatten 17.1, ..., 17.4 in einem für den Transport bereiten Zustand gezeigt. Auf der (gemäss Fig. 4b) rechten Seite der Stützkonstruktion 15 befindet sich ein schmaler Container 18. Seine Breite beträgt entsprechend dem zur Verfügung stehenden Platz nur etwa 40-50 cm. Ansonsten kann er wie in Fig. 2a, b gezeigt ausgeführt sein.

n der Regel werden natürlich nicht Glasplatten 17.1, ..., 17.4 und Container 18 gleichzeitig auf dem A-Gestell transportiert. Es ist daher ohne weiteres möglich, vier volle schmale Container zu transportieren. Im leeren Zustand werden sie wie in Fig. 1 gezeigt transportiert.

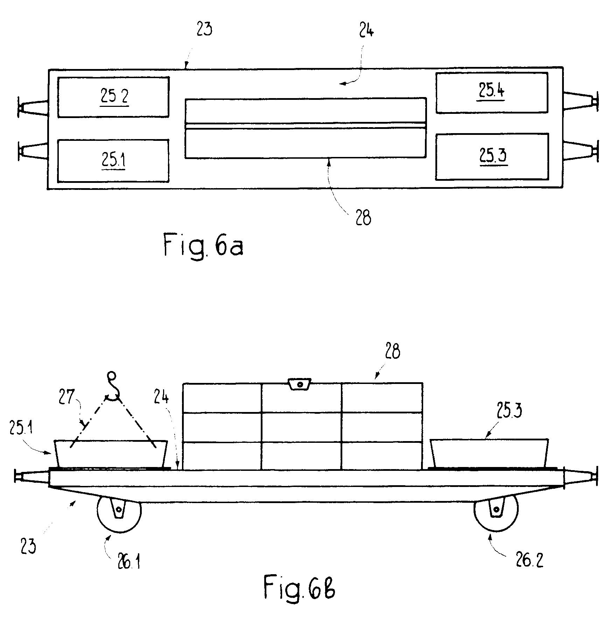

Fig. 5a, b zeigen eine Ausführungsform, bei der der Container in jedem Fall sowohl zusammen mit einem A-Gestell als auch zusammen mit einem L-Gestell transportiert werden kann. Voraussetzung dafür ist, dass der Tiefladeteil 3 länger ist als es für den Transport eines L-Gestells 20 eigentlich erforderlich wäre. Die Ueberlänge entspricht dabei der Länge eines Containers 19, welcher vor oder hinter dem L-Gestell 20 zu transportieren ist. Der Container 19 weist eine Bodenplatte 21 auf, die in gleicher Weise wie die Bodenplatte eines an sich bekannten A- oder L-Gestells ausgeführt ist. D. h. an zwei einander gegenüberliegenden (Längs- oder Quer-)Seiten sind untergreifbare Tragprofile 22.1, 22.2 vorgesehen. Steht der Container auf dem Boden für den Transport bereit, dann kann der Schleppanhänger rückwärts herangefahren werden, wobei er mit korrespondierend aufgeführten Unterstützungsprofilen unter die Tragprofile 22.1, 22.2 fährt.

Für den Transport werden Container 19 und L-Gestell 20 wie in Fig. 5a dargestellt hintereinander auf dem Boden plaziert, so dass sie gleichzeitig aufgeladen werden können.

L- und A-Gestell sowie der Tiefladeteil des Fahrzeugs sind in an sich bekannter Weise ausgeführt. In bezug auf das Fahrzeug sind dabei L- und A-Gestell auswechselbar.

Im folgenden wird ein typischer Anwendungsfall der Erfindung beschrieben.

Der Glashersteller liefert die vom Verarbeiter gewünschten Glasplatten mit einem erfindungsgemässen Fahrzeug aus. Das Gestell für die Platten ist dabei voll, und die leeren Container für die zu recyclierenden Glasscherben befinden sich im Zusatzladeraum. Je nach Grösse des Fahrzeugs beträgt das Gewicht der Ladung 15-25 t. Die leeren Container haben entsprechend ihrer Grösse ein Gewicht von vielleicht 100-400 kp.

Beim Verarbeiter lädt das Fahrzeug das beladene L-Gestell und die leeren Container ab, resp. ein Hubstapler oder Kran lädt die leeren Container aus. Ein leeres Gestell mit gefüllten Containern (mit einem Gewicht von mehreren Tonnen) steht bereit und kann unverzüglich geladen werden. Das volle Gestell und die leeren Container verbleiben bis zur nächsten Auslieferung beim Glasverarbeiter. Der Fahrer kann mit dem Fahrzeug unverzüglich zum Glashersteller zurückfahren und das mit den vollen Containern beladene Gestell abladen. Dort werden die Container ins Glasscherbendepot für die Wiederverwertung gekippt.

Auf diese Weise kann die Zahl der Leerfahrten verringert werden. Auch ein Umladen oder Umleeren des Containerinhalts zwischen Entstehungsort und Depot entfällt.

Wird mit A-Gestellen und schmalen Containern transportiert, dann ist es für das Füllen der Container bequem, wenn zwei oder mehr schmale Container nebeneinander gestellt und ev. sogar mit einem gemeinsamen Trichterelement verbunden werden. Auf diese Weise kann die Einfüll- bzw. Einwurföffnung für die Glasscherben vergrössert werden.

Damit die Container auch in die unterschiedlichen Betriebsabläufe integriert werden können, sollten sie eine Höhe von 1,5 m nicht überschreiten.

Die Erfindung beschränkt sich natürlich nicht auf die beschriebenen Ausführungsbeispiele. Um einen Laderaum für die Container zu schaffen, kann z. B. ein Glasplatten-Transportgestell mit einer überlangen Bodenplatte dienen. D. h. die Bodenplatte ist gerade soviel länger als die vertikale Stützkonstruktion, dass ein erfindungsgemässer länglicher Container in Längs- oder Querrichtung transportiert werden kann. Um ein derart überlanges A- oder L-Gestell transportieren zu können, müsste der Tiefladeteil bekannter Fahrzeuge entsprechend verlängert werden. Mit Vorteil wird ein solches Gestell derart geladen, dass der freie Laderaum für den Container von der Fahrzeugrückseite her zugänglich bleibt.

Es ist auch denkbar, die bekannten Stützkonstruktionen derart abzuwandeln, dass auf halber Länge ein in Querrichtung freier Durchgang vorgesehen ist, der es erlaubt, einen Container quer durch die Stützkonstruktion hindurchgehend zu transportieren. Bei einer derartigen Lösung sind jedoch die Container kleiner, insbesondere kürzer zu dimensionieren als in den Fig. 3a, b und 4a, b gezeigt.

Die Erfindung kann statt mit einem Schleppanhänger auch mit einem eigenständigen Anhänger oder einem eigenständigen Zugfahrzeug verwirklicht werden.

Fig. 6a, b zeigt einen Eisenbahnwagen 23 mit einer im wesentlichen ebenen Ladefläche 24. An den beiden Enden, d. h. über den beiden Radachsen 26.1, 26.2 (oder entsprechenden Fahr- bzw. Drehgestellen) sind (im vorliegenden Beispiel) je zwei Container 25.1, 25.2 resp. 25.3, 25.4 plaziert. Sie nehmen die Glasscherben auf und sind z. B. an Seilen 27 aufhängbar (um auf den Eisenbahnwagen 23 aufgeladen werden zu können). Zwischen den beiden Containerpaaren 25.1/25.2 und 25.3/25.4 ist z. B. ein A-Gestell 28 geladen. Dieses ist z. B. wie in Fig. 4a, b dargestellt ausgeführt.

Damit A-Gestell 28 und Container 25.1, ..., 25.4 sich während des Transports auf dem Eisenbahnwagen nicht verschieben können, sind auf der Ladefläche 24 Sicherungsbalken 29.1, ..., 29.6 befestigt. Diese definieren einen (z. B. rechteckigen) Bereich, in welchen die Container 25.1, ..., 25.4 resp. das A-Gestell 28 hineingestellt werden können.

Die Anzahl der zu ladenden Container 25.1, ..., 25.4 hängt von deren Grösse und vom verfügbaren Platz auf der Ladefläche 24 ab. U. U. können auch nur zwei Container geladen werden. Je nach Länge der Ladefläche ist weiter denkbar, dass zwei A-Gestelle auf der Längsachse hintereinander geladen werden. Es ist weiter denkbar, dass - wie in Fig. 4a, b gezeigt - schmale Container auf dem A-Gestell selbst mitgeführt werden.

Von Vorteil ist natürlich, wenn die Sicherungsbalken auf der Ladefläche 23 derart angeordnet und ausgeführt sind, dass z. B. wahlweise zwei A-Gestelle ohne zusätzliche Container oder ein A-Gestell mit z. B. vier zusätzlichen Containern (wie in Fig. 6a, b gezeigt) geladen werden können. Dies kann z. B. dadurch erreicht werden, dass die Sicherungsbalken nur eine äussere, gegen den Rand der Ladefläche 23 hin wirkende Arretierung bilden.

Zusammenfassend ist zu sagen, dass die Erfindung ein effizientes Glasscherbenrecycling insbesondere im Rahmen der Floatglasherstellung erlaubt. Im Prinzip lässt sich die Erfindung aber auch für andere, ähnlich geartete Transportsysteme einsetzen.

## Patentansprüche

1. Verfahren für den Transport von Materialplatten und von Bruchmaterial zwischen einem Hersteller und einem Verarbeiter, bei welchem die Materialplatten (17.1, ..., 17.4) mit einem Fahrzeug mit einem auswechselbaren Gestell (10, 13) für den stehenden Transport der Materialplatten transportiert werden, und bei welchem zusätzlich mindestens ein Container (5.1, 5.2; 18, 19) für Bruchmaterial mitgeführt wird, wobei der leere Container (5.1, 5.2; 18, 19) auf einem zusätzlichen Laderaum (4) des Fahrzeugs vom Hersteller zum Verarbeiter transportiert wird, dadurch gekennzeichnet, dass der mit Bruchmaterial gefüllte Container auf dem auswechselbaren Gestell (10, 13) an der Stelle der Materialplatten transportiert wird.

2. Verfahren nach Anspruch 1, dadurch gekennzeichnet, dass als auswechselbares Gestell ein A- oder L-Gestell verwendet wird.

3. Fahrzeug für den Transport von Materialplatten und von Bruchmaterial zwischen einem Hersteller und einem Verarbeiter, umfassend ein auswechselbares Gestell (10, 13) für den stehenden Transport der Materialplatten (17.1, ..., 17.4) sowie einen zusätzlichen Laderaum (4) mit mindestens einem Container (5.1, 5.2; 18, 19) für das Bruchmaterial, dadurch gekennzeichnet, dass der mindestens eine Container in der Grösse so bemessen ist, dass er im gefüllten Zustand an der Stelle der Materialplatten (17.1, ..., 17.4) transportiert werden kann.

4. Fahrzeug nach Anspruch 3, dadurch gekennzeichnet, dass das auswechselbare Gestell ein L-Gestell (10) oder ein A-Gestell (13) ist, wobei im zweitgenannten Fall vorzugsweise mindestens zwei auf dem leeren A-Gestell (13) transportierbare Container (18) vorgesehen sind.

5. Fahrzeug nach einem der Ansprüche 3 bis 4, dadurch gekennzeichnet, dass der zusätzliche Laderaum (4) in Fahrtrichtung vor dem Gestell (10, 13) angeordnet und in der Art einer zusätzlichen Länge einer Ladebrücke verwirklicht ist.

6. Fahrzeug nach einem der Ansprüche 3 bis 5, dadurch gekennzeichnet, dass der Container (19) auf einem in gleicher Weise wie das Gestell auswechselbaren Tragteil (21) transportierbar ist.

7. Fahrzeug nach einem der Ansprüche 3 bis 5, dadurch gekennzeichnet, dass es als Schleppanhänger (1) für einen Sattelschlepper ausgeführt ist und dass der zusätzliche Laderaum (4) oberhalb einer Kupplung (2) zwischen Schleppanhänger (1) und Sattelschlepper angeordnet ist.

8. Fahrzeug nach einem der Ansprüche 3 oder 5 bis 7, dadurch gekennzeichnet, dass der mindestens eine Container (5.1, 5.2, 19) eine Breite (B) von mindestens 80 cm, vorzugsweise etwa 90 cm und eine Lange (L) von mindestens 150 cm, vorzugsweise etwa 200 cm hat.

9. Fahrzeug nach einem der Ansprüche 4 bis 7, dadurch gekennzeichnet, dass der mindestens eine Container (18) eine Breite (B) von höchstens 60 cm, insbesondere etwa 40 cm und eine Länge (L) von mindestens 150 cm, insbesondere etwa 200 cm hat.

10. Fahrzeug nach einem der Ansprüche 3 bis 9, dadurch gekennzeichnet, dass der mindestens eine Container (5.1) mit Füssen (8.1, . . ., 8.4) ausgestattet ist.

11. Fahrzeug nach einem der Ansprüche 3 bis 8, dadurch gekennzeichnet, dass der mindestens eine Container (5.1) mit Halterungen (9.1, . . . , 9.3) ausgerüstet ist, um mit einem Ladekran aufgenommen werden zu können.

12. Fahrzeug nach einem der Ansprüche 3 bis 9, dadurch gekennzeichnet, dass der mindestens eine Container (5.1) geneigte, nur geringfügig von der Vertikalen abweichende Seitenwände (6.1, . . . , 6.4) hat.

13. Fahrzeug nach einem der Ansprüche 3 bis 12, dadurch gekennzeichnet, dass es als Eisenbahnwagen mit einer Ladefläche (24) mit Sicherungsbalken zur Fixierung des mindestens einen Containers (25.1, . . . , 25.4) ausgeführt ist.

## Claims

1. Method of transporting material panels and broken material between a manufacturer and a processor, in which the material panels (17.1, . . . , 17.4) are transported by a vehicle having an interchangeable frame (10, 13) for vertical transportation of the material panels, and in which at least one container (5.1, 5.2; 18, 19) for broken material is additionally transported simultaneously, the empty container (5.1, 5.2; 18, 19) being transported from the manufacturer to the processor on an additional loading area (4) of the vehicle, characterized in that the container filled with broken material is transported on the interchangeable frame (10, 13) in place of the material panels.

2. Method according to claim 1, characterized in that an A- or L-frame is used as an interchangeable frame.

3. Vehicle for transporting material panels and broken material between a manufacturer and a processor, comprising an interchangeable frame (10, 13) for vertical transportation of the material panels (17.1, . . . , 17.4) as well as an additional loading area (4) having at least one container (5.1, 5.2; 18, 19) for the broken material, characterized in that the at least one container is of such a size that in the filled state it may be transported in place of the material panels (17.1, . . . , 17.4) .

4. Vehicle according to claim 3, characterized in that the interchangeable frame is an L-frame (10) or an A-frame (13), there being preferably provided in the latter case at least two containers (18) which are transportable on the empty A-frame (13).

5. Vehicle according to one of claims 3 to 4, characterized in that the additional loading area (4) is disposed, in the direction of travel in front of the frame (10, 13) and is realized in the manner of an additional length of a loading platform.

6. Vehicle according to one of claims 3 to 5, characterized in that the container (19) is transportable on a carrying part (21) which is interchangeable in an identical manner to the frame.

7. Vehicle according to one of claims 3 to 5, characterized in that it takes the form of a tow trailer (1) for a truck tractor and that the additional loading area (4) is disposed above a coupling (2) between tow trailer (1) and truck tractor.

8. Vehicle according to one of claims 3 or 5 to 7, characterized in that the at least one container (5.1, 5.2, 19) has a width (B) of at least 80 cm, preferably around 90 cm, and a length (L) of at least 150 cm, preferably around 200 cm.

9. Vehicle according to one of claims 4 to 7, characterized in that the at least one container (18) has a width (B) of at most 60 cm, in particular around 40 cm, and a length (L) of at least 150 cm, in particular around 200 cm.

10. Vehicle according to one of claims 3 to 9, characterized in that the at least one container (5.1) is equipped with feet (8.1, ..., 8.4).

11. Vehicle according to one of claims 3 to 8, characterized in that the at least one container (5.1) is equipped with holding devices (9.1, ..., 9.3) to enable it to be picked up by a loading crane.

12. Vehicle according to one of claims 3 to 9, characterized in that the at least one container (5.1) has inclined side walls (6.1, ..., 6.4) deviating only slightly from the vertical.

13. Vehicle according to one of claims 3 to 12, characterized in that it takes the form of a goods wagon having a loading area (24) with retaining beams for fixing the at least one container (25.1, ..., 25.4) in position.

## Revendications

1. Procédé pour transporter un matériau en plaques et un matériau en morceaux entre un fabricant et une unité de traitement, selon lequel le matériau en plaques (17.1, ..., 17.4) est transporté par un véhicule comportant un chevalet interchangeable (10, 13) pour le transfert du matériau en plaques en position debout, et selon lequel en outre au moins un conteneur (5. 1, 5.2 ; 18, 19) pour le matériau en morceaux est transféré conjointement, le conteneur vide (5. 1, 5.2 ; 18, 19) étant transporté du fabricant jusqu'à l'unité de traitement dans un espace de chargement supplémentaire (4) du véhicule, caractérisé en ce que le conteneur rempli par le matériau en morceaux est transporté sur le chevalet interchangeable (10, 13), à l'emplacement du matériau en plaques.

2. Procédé selon la revendication 1, caractérisé en ce qu'on utilise comme chevalet interchangeable, un chevalet A ou un chevalet L.

3. Véhicule pour le transport d'un matériau en plaques et d'un matériau en morceaux entre un fabricant et une unité de traitement, comprenant un chevalet interchangeable (10, 13) pour le transport du matériau en plaques (17.1, ..., 17.4) en position debout, ainsi qu'un espace de chargement supplémentaire (4) comportant au moins un conteneur (5. 1, 5.2 ; 18, 19) pour le matériau en morceaux, caractérisé en ce que le au moins un conteneur a des dimensions telles qu'à l'état rempli il peut être transporté, à l'emplacement du matériau en plaques (17.1, ..., 17.4).

4. Véhicule selon la revendication 3, caractérisé en ce que le chevalet interchangeable est un chevalet en L (10) ou un chevalet A (13), et dans le second cas indiqué, de préférence au moins deux conteneurs (18) transportables sur le chevalet A vide (13) sont prévus.

5. Véhicule selon l'une des revendications 3 et 4, caractérisé en ce que l'espace de chargement supplémentaire (4) est disposé dans la direction de déplacement en avant du chevalet (10, 13) et est réalisé à la manière d'une longueur supplémentaire d'un pont de chargement.

6. Véhicule selon l'une des revendications 3 à 5, caractérisé en ce que le conteneur (19) peut être transporté sur une partie de support (21) interchangeable de la même manière que le chevalet.

7. Véhicule selon l'une des revendications 3 à 5, caractérisé en ce qu'il est agencé sous la forme d'une remorque (1) pour un véhicule tracteur de semi-remorque et que l'espace de charge supplémentaire (4) est disposé audessus d'un attelage (2) entre la remorque (1) et le véhicule tracteur.

8. Véhicule selon l'une des revendications 3 ou 5 à 7, caractérisé en ce que le au moins un conteneur (5.1, 5.2 ; 19) possède une largeur (B) égale au moins à 80 cm, de préférence égale approximativement à 90 cm, et une longueur (L) égale au moins à 150 cm et de préférence égale approximativement à 200 cm.

9. Véhicule selon l'une des revendications 4 à 7, caractérisé en ce que le au moins un conteneur (18) sous une largeur (B) égale au maximum à 60 cm, notamment égale à environ 40 cm, et une longueur (L) égale à au moins 150 cm, et égale notamment à environ 200 cm.

10. Véhicule selon l'une quelconque des revendications 3 à 9, caractérisé en ce que le au moins un conteneur (5. 1) est pourvu de pieds (8. 1, ..., 8.4).

11. Véhicule selon l'une des revendications 3 à 8, caractérisé en ce que le au moins un conteneur (5.1) est équipé de dispositifs de retenue (9.1, ..., 9.3) de manière à pouvoir être saisi par une grue de chargement.

12. Véhicule selon l'une des revendications 3 à 9, caractérisé en ce que le au moins un conteneur (5.1), possède des parois latérales inclinées (6.1, ..., 6.4) qui s'écartent seulement légèrement de la verticale.

13. Véhicule selon l'une des revendications 3 à 12, caractérisé en ce qu'il est réalisé sous la forme d'une voiture de chemin de fer comportant une surface de chargement (24) comportant des balanciers de sécurité pour la fixation d'au moins un conteneur (25.1, ..., 25.4).
